# EUROPEAN PATENT APPLICATION

(11) **EP 4 748 631 A1**
(43) Date of publication of application: **27.05.2026**
(21) Application number: 25216188.0
(22) Date of filing: 17.11.2025
(51) Int. Cl.: B60L 53/63, B60L 53/66, B60L 53/67, B60L 53/68

(54) **METHOD FOR OPTIMIZED POWER DISTRIBUTION FROM A CHARGING STATION FOR RECHARGING ELECTRIC OR ELECTRIFIED VEHICLES, AMONG A PLURALITY OF CHARGING DEVICES FOR RECHARGING VEHICLES AND RELATED CHARGING STATION**

(30) Priority: 21.11.2024 IT 202400026265
(71) Applicant: Bitron Electronics S.p.A. Con Unico Socio, 10122 Torino (IT)
(72) Inventor: CURCIO, Salvatore, 84131 SALERNO (IT); ADAMI, Sabrina, 84131 SALERNO (IT); GARUFI, Massimo, 84131 SALERNO (IT)
(74) Representative: Boario, Enrico

(57) **Abstract**

Method for optimized power distribution from a charging station (3) for recharging vehicles (V), among charging devices (5), comprising a control unit (30) adapted to execute the method. The method comprises the steps of: receiving a plurality of intrinsic data (D) of the charging station (3) at a time instant (T), wherein the data (D) comprise: a maximum available current (Aa); a total used current (Au); a priority order of the vehicles (V); determining a current surplus (As); checking if a vehicle (V) has arrived; if NO, returning to the step of receiving a plurality of data (D); if YES, executing one or more of the following steps of checking if: at least a period of time (Δt1, Δt2) has already elapsed since the arrival of a previous vehicle (V); one or more vehicles (V) have arrived; one or more vehicles (V) have left the charging station (3); said maximum available current (Aa) has increased. If the answer obtained from all checks made after the arrival of a vehicle (V) is NO, or in parallel with said steps of checking: checking if the maximum available current (Aa) has decreased. If the answer obtained from at least one of the checks made after the arrival of a vehicle (V) is YES and the maximum available current has not decreased: distributing the current surplus (As) among the vehicles by increasing the current supplied to the vehicles (V), taking into account the priority order. If the maximum available current has decreased, decreasing the current supplied for recharging the vehicles (V), taking into account the priority order.

## Description

The present invention relates to a method for optimized distribution of power, available from a charging station, among a plurality of charging devices, including devices supplying AC power, comprised in the charging station for charging electric or electrified vehicles.

The present invention further relates to a charging station suitable for implementing the method of the present invention.

Load-balancing algorithms for AC charging stations are known in the art, such as those described in patent application EP3825165A1, which discloses a power distribution system and a method for charging multiple electric vehicles. The power distribution system includes: an alternating-current source, configured to provide a first electric power; an energy storage device, configured to provide a second electric power, where the first electric power and the second electric power together constitute a total supply power; a charging module, including multiple charging units, wherein each one of the charging units is electrically coupled to the alternating-current source and to the energy storage device through an alternating-current bus, and the charging units are used to charge the electric vehicles; and a power management module, performing a signal transmission with the alternating-current source, the energy storage device and the charging module through a signal bus. The system and the method are configured to select an orderly charging mode according to the total supply power and total required power of the charging module.

The above-mentioned, and currently known, load-balancing and/or system power distribution techniques for distributing power among multiple charging devices assign power budgets that are either over-estimated or underestimated in comparison with the vehicle's actual requirements.

According to a first solution known in the art, a dedicated unit is needed for dynamic power management.

Systems and methods are also known wherein different charging strategies can be implemented, all of which are mutually exclusive.

Solutions are also known which include different possible charging strategies. According to some of such possible charging strategies, load balancing is based on the number of charging points and the maximum available power. According to other possible charging strategies, a FIFO (First Input First Output) priority policy is adopted in association with a control parameter consisting of the state of charge (SOC). This parameter requires the installation of additional control systems for monitoring the state of charge.

The present invention aims at solving the above-mentioned technical problems, as well as other problems, by implementing a method for distributing the power available from the charging station among different vehicles requesting to be charged by a respective charging device of said charging station.

One aspect of the present invention relates to a method having the features set out in the appended claim 1.

A further aspect of the present invention relates to a charging station having the features set out in the appended claim 10.

Auxiliary features of the method and charging station are set out in respective dependent claims.

The features and advantages of the method and charging station will become apparent in light of the following description of several possible implementations of the method and embodiments of the charging station, as well as from the annexed drawings, wherein:

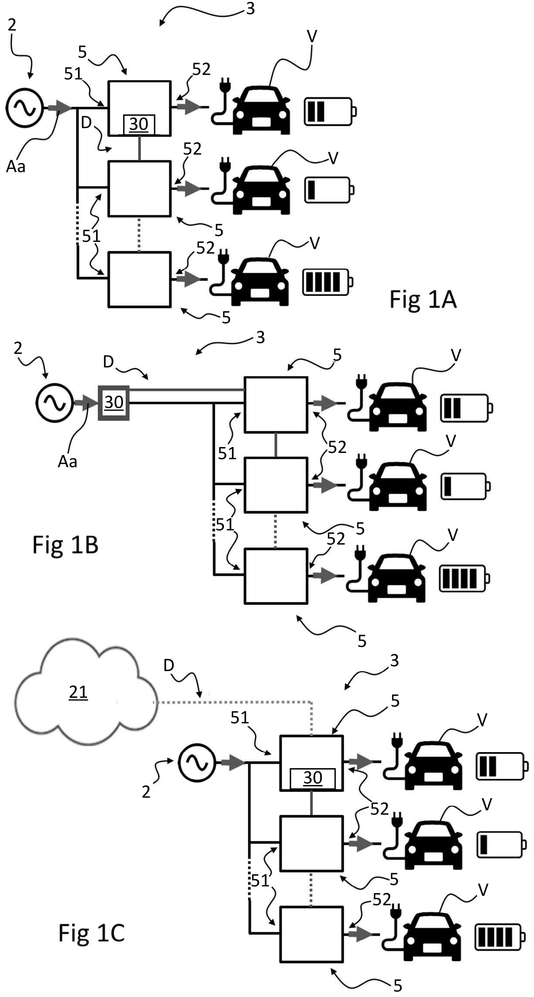

- Figures 1A, 1B and 1C show three possible implementations of the method according to the present invention and embodiments of the charging station, wherein Figure 1A shows a first embodiment in which a charging device comprises a control unit and can determine the intrinsic data of the charging station at a predetermined time instant; Figure 1B shows a second embodiment, wherein the control unit is independent of the charging devices and determines the intrinsic data of the charging station at a predetermined time instant; Figure 1C shows a third embodiment, wherein a charging device comprises the control unit, while the intrinsic data of the charging station at a predetermined time instant are provided, through suitable protocols, by a central system;
- Figure 2 shows one possible implementation of the method and one possible embodiment of the charging station according to the present invention, wherein the user places a charging request through a user interface on a mobile device;
- Figure 3 shows a further possible implementation of the method and a further possible embodiment of the charging station according to the present invention, combining the implementations and embodiments shown in the above Figures 1A-1C and 2.

With reference to the above-listed figures, reference numeral 3 designates the charging station as a whole and as such.

The method according to the present invention is designed for optimized power distribution from a charging station 3 for recharging electric or electrified vehicles "V", among a plurality of charging devices 5 for recharging vehicles "V", preferably providing AC power, wherein such charging devices 5 are comprised in said charging station 3. Said charging station 3 further comprises a control unit 30. Said control unit 30 is adapted to execute said method for optimized power distribution according to the present invention.

Said method for optimized power distribution according to the present invention comprises the following steps, preferably carried out in succession:
- receiving a plurality of intrinsic data "D" of the charging station 3 at a predetermined time instant "T", wherein said data "D", relating to said time instant "T", comprise:
   ∘ a maximum available current "Aa" for the charging station 3;
   ∘ a total used current "Au", i.e. the sum of currents being used by all vehicles "V" connected to, and being recharged by, said charging devices 5;
   ∘ a priority order of said vehicles "V", said priority order being at least a function of an order of arrival of said vehicles "V" at the charging station 3;
- determining a current surplus "As" by subtracting said total used current "Au" from said maximum available current "Aa";
- checking if a vehicle "V" has arrived;
   - if NO, returning to the step of receiving a plurality of data "D";
   - if YES, executing one or more of the following steps in order to check if:
      - at least a period of time (Δt1, Δt2) has already elapsed since the arrival of a previous vehicle "V";
      - one or more vehicles "V" have arrived;
      - one or more vehicles "V" have left the charging station 3;
      - said maximum available current "Aa" has increased;
- if the answer obtained from all checks made after the arrival of a vehicle "V" is NO, or in parallel with said checks made after the arrival of a vehicle "V", executing a step of: checking if said maximum available current "Aa" has decreased;
- if said maximum available current "Aa" has not decreased and the answer obtained from at least one of the other checks made after the arrival of a vehicle "V" is YES:
   - distributing the current surplus "As" among the vehicles "V" being recharged by increasing the current supplied for recharging the vehicles "V", wherein during said step of distributing the current surplus "As" said priority order of said vehicles "V" is taken into account;
if the answer obtained from said step of checking if said maximum available current "Aa" has decreased is NO: maintaining the currently set power distribution; if YES: decreasing the current supplied for recharging the vehicles "V", taking into account said priority order of said vehicles "V".

In a preferred implementation of the method according to the present invention, said step of checking if said maximum available current "Aa" has decreased is advantageously carried out when the answer obtained from the step of checking if a vehicle "V" has arrived is YES, and said step of checking if said maximum available current "Aa" has decreased is carried out in parallel with the other steps of checking executed after the step of checking if a vehicle "V" has arrived, as described in the present patent application. Alternatively, said step of checking if said maximum available current "Aa" has decreased is carried out after the execution of said step of executing one or more steps of checking as previously described herein.

For the purposes of the present patent application, the terms "power" and "current" will be used to indicate the electric quantity used for recharging vehicles "V". In the following description, for simplicity's sake, the term "current" will be used, but it is clear that such term can be replaced with the term "power", without the technical teaching, the technical contents, or the defined concept being affected, as is well known to a person skilled in the art.

Preferably, said plurality of data "D" comprise also a current requested by each vehicle "V" that is about to start a charging process.

The method according to the present invention allows for periodically checking if the maximum available current "Aa" of a source, e.g. an electric grid 2, and the total used current "Au", and optionally also the current requested by each one of the vehicles "V", have changed in relation to the instant "T" of execution of the process, so that one or more power/current budgets can be set for each charging device 5 by suitably taking into account the priority order and by monitoring the arrival of one or more vehicles "V" at charging station 3, in particular by distributing the current surplus or re-distributing the maximum available current according to said priority order.

Preferably, said method is executed at each time instant "T", e.g. with a time interval of less than 1 minute, preferably executing said step of determining a current surplus "As" every 20 msec. Even more preferably, said step of determining a current surplus "As" is carried out in parallel with the method, according to the present invention, every 20 msec, independently of the step executed during the method according to the present invention.

The present invention also makes it possible to verify whether said vehicles "V" being recharged require AC charging, e.g. single-phase or three-phase AC charging, thus avoiding any waste of power, and hence of maximum available current "Aa", which would otherwise be assigned to, but not used by, a vehicle "V" to be recharged.

The method according to the present invention makes it possible to allocate or dynamically re-allocate charging power/current to each charging device 5, including AC-type ones, even when it is not possible to know the state of charge, or SOC, of the individual vehicles "V" connected to the charging device 5.

In the method according to the present invention, said plurality of intrinsic data "D" of charging station 3 are inputted to said control unit 30, which may be either internal or external to a charging device 5, or sent from a central system 21 to charging station 3, particularly to said control unit 30. Said data "D" include the maximum available current "Aa" for charging station 3, which is the current/power supplied by a source, e.g. an electric grid 2. More generally, the method according to the present invention tries, in a first attempt, to maximize the current distributed to vehicles "V" connected to charging devices 5 and requesting a charge, also taking into account the priority order, in order to maximize the sold current, i.e. sold power.

The method according to the present invention, once it has determined how to distribute, or re-distribute, the available current to the vehicles "V" to be recharged, provides for distributing the current thus determined to the charging devices 5 involved, and the execution of the method can be continued, for example, by repeating the method at another time instant "T".

Periodically, e.g. at each time instant "T", preferably every 20 msec, the method according to the present invention checks how much current is available for charging station 3, thus determining said maximum available current "Aa", and how much current is actually being used by vehicles "V" being recharged, thus determining said total used current "Au", and checks if other vehicles "V" have arrived or if one or more vehicles "V" have been disconnected from charging devices 5. When one or more new vehicles "V" arrive or when a vehicle "V" is disconnected from a charging device 5 of charging station 3, or after some time, e.g. a first time period "Δt1", preferably ten minutes, has elapsed since the detection of one of such events, or when the maximum available current "Aa" for charging station 3 changes, the current surplus "As" is recalculated and, if appropriate, distributed among the connected vehicles "V" according to the priority order, e.g. the order of arrival, or, if said maximum available current "Aa" has decreased, it will be suitably redistributed among the connected vehicles "V" according to the priority order, e.g. the order of arrival.

When a vehicle "V" arrives after some time, e.g. a second time period "Δt2", preferably one minute, the previously computed current surplus "As" will be distributed, e.g. based on the current requested by each vehicle "V", taking into account said priority order of said vehicles "V".

In one possible, but merely illustrative and nonlimiting, implementation of the method according to the present invention, if said current surplus "As" is greater than or equal to a first threshold "Amax", e.g. 32A, then the current supplied for charging each vehicle "V" will be set to said first threshold "Amax" according to said priority order of said vehicles "V".

The present implementation makes it possible to maximize the charging current, thus reducing the time necessary for charging vehicle "V", maximizing the number of vehicles completing a faster recharge process, and increasing as much as possible the amount of current sold for recharging vehicles "V".

For the purposes of the present description, said first threshold "Amax" is a predefined value, e.g. 32A, dictated by the design specifications of charging device 5 and/or charging station 3, or dictated by regulations in force, e.g. safety regulations and/or charging standards adopted by the charging station, e.g. AC standards such as "Type 1" or "Type 2", or DC standards such as "CCS Combo" or "CHAdeMO".

In another possible, but merely illustrative and nonlimiting, implementation of the method according to the present invention, if the current surplus "As" is greater than or equal to a second threshold "Amin", e.g. 1A, the current supplied to vehicles "V" with higher priority will increase by at least said second threshold "Amin" until the current surplus "As" distributed to the various vehicles "V" is exhausted and until the current supplied for recharging vehicle "V" equals said first threshold "Amax".

Advantageously, said second threshold "Amin" is lower than said first threshold "Amax".

For the purposes of the present description, said second threshold "Amin" is a minimum threshold of current that can be distributed for recharging vehicles "V" in order to obtain a considerably faster vehicle charging process. The value of said second threshold "Amin" must be such that the charging current increase thus obtained will shorten the charging times, and that the sold current amount can be easily accounted for. Preferably, said second threshold "Amin" is at least 1A.

In a preferred implementation of the method according to the present invention, said step of checking if a vehicle "V" has arrived comprises a sub-step of checking if it is the first vehicle "V". In the present implementation of the method, if the answer obtained from the step of checking if it is the first vehicle "V" is YES: executing a step of checking if said current surplus "As" is greater than or equal to a third threshold "Amid", e.g. 6A. If the answer obtained from the step of checking if said current surplus "As" is greater than or equal to a third threshold "Amid" is NO, returning to the step of receiving a plurality of data "D"; if YES: executing a step of checking if said current surplus "As" is greater than or equal to a first threshold "Amax", e.g. 32A. If the answer obtained from the step of checking if said current surplus "As" is greater than or equal to a first threshold "Amax" is YES: the current supplied for recharging said first vehicle "V" will be set to said first threshold "Amax"; if the answer is NO: the current supplied for recharging said first vehicle "V" will be set to a value equal to said current surplus "As". Preferably, once the current for recharging the first vehicle "V" has been allocated, the method will return to the step of receiving a plurality of data "D".

The present implementation of the method makes it possible to maximize the current sold to said first vehicle "V", delivering thereto at least all the current surplus "As", possibly up to said first threshold "Amax", thereby leading to all of the above-mentioned advantages. The present solution discerns between a method executed during the normal charging activity and a method executed for the first vehicle, thus always maximizing the sold current/power.

Said third threshold "Amid" is, advantageously, higher than said second threshold "Amin" and lower than said first threshold "Amax". Preferably, said first threshold "Amax" is 32A, said second threshold "Amin" is 1A, and said third threshold "Amid" is 6A.

In a preferred implementation of the method according to the present invention, in the event that the current supplied for charging a vehicle "V" is 0A, the current increase allocated to that vehicle "V", in particular taking into account the priority order after distribution, will be greater than said minimum second threshold "Amin" and at least equal to said third threshold "Amid", e.g. 6A. Preferably, such a distribution will occur when said current surplus "As" is greater than or equal to said third threshold "Amid".

In the present embodiment, in the event that the current supplied for charging a vehicle "V" is 0A, the current increase will only be allocated to that vehicle "V", in particular taking into account the priority order after distribution, if said current surplus "As" is greater than 6A. This aspect is implemented, for example, through a suitable checking step. Should the current surplus "As" be lower than 6A, no current increase will therefore be allocated to such vehicle "V" for recharging it.

The present implementation makes it possible to deliver to those vehicles "V" starting the charging process an appropriate amount of current to speed up the charging of the vehicle, e.g. so as to reach a minimum range of said vehicle "V", in addition to supplying an amount of current that can be easily accounted for, i.e. a value justifying an economical transaction through electronic payment circuits, e.g. credit cards.

In one possible, but merely illustrative and nonlimiting, implementation of the method according to the present invention, if the answer obtained from the step of checking if a vehicle "V" has arrived is YES, checking if:
- one or more vehicles "V" have been disconnected from a charging device 5 of the charging station 3;
- a first period of time "Δt1" has already elapsed, e.g. at least 10 minutes;
- the maximum available current "Aa" has changed, in particular increased.

If the answer obtained from at least one of these last three checks made after the arrival of a vehicle "V" is YES, and said maximum available current "Aa" has not decreased: executing a step of checking if the current surplus "As" is greater than or equal to a second threshold "Amin", e.g. 1A. If the answer obtained from the step of checking is YES: the current supplied to the vehicles "V" with higher priority will increase by at least said second threshold "Amin" until the current surplus "As" distributed to the various vehicles "V" is exhausted and until the current supplied for recharging the vehicle "V" equals said first threshold "Amax". Otherwise, if the answer obtained from the step of checking is NO: maintaining the currently set power distribution.

If the answer obtained from all three checks made after the arrival of a vehicle "V" is NO, or, advantageously, in parallel with such checks made after the arrival of a vehicle "V": executing a step of checking if said maximum available current "Aa" has decreased. If the answer obtained from the step of checking if said maximum available current has decreased is NO: maintaining the currently set power distribution. Otherwise, if the answer obtained from the step of checking if said maximum available current has decreased is YES: decreasing the current supplied for recharging the vehicles "V", taking into account said priority order of said vehicles "V".

In a preferred implementation of the method according to the present invention, if the answer obtained from the step of checking if said maximum available current is YES, a step is executed to check if said maximum available current "Aa" is greater than or equal to a third threshold "Amid", e.g. 6A; if the answer is NO: the current supplied to the vehicles "V" will be zeroed, i.e. set to 0A.

If the answer is YES: based on said priority order of said vehicles "V", the current assigned to each vehicle "V" will be the current currently being used by each vehicle "V", if lower than said maximum available current "Aa", otherwise it will be said maximum available current "Aa"; such distribution will be maintained until said maximum available current "Aa" has been totally distributed.

In the present implementation of the method, if said maximum available current "Aa" is lower than a predetermined threshold, in particular a third threshold "Amid", e.g. 6A, it will not be appropriate to continue recharging any of the vehicles "V", since such current will be lower than a minimum level necessary for recharging vehicle "V".

Preferably, after the step of maintaining the currently set power distribution, or after a distribution of the current surplus "As" or a re-allocation of the maximum available current, as described with reference to the various possible implementations of the method, a step is performed of continuing the execution of the method at another time instant "T".

In a preferred implementation of the method according to the present invention, if the answer obtained from the step of checking if a vehicle "V" has arrived is YES, a step is performed of checking if one or more vehicles "V" have arrived.

The present step of checking is preferably carried out in parallel with the previous steps of checking described with reference to the various possible implementations of the method, following the step of checking if a vehicle "V" has arrived.

If the answer obtained from the step of checking if one or more vehicles "V" have arrived is YES: executing a step of checking if the current surplus "As" is greater than or equal to a first threshold "Amax", e.g. 32A. Preferably, if the answer obtained from the step of checking if one or more vehicles "V" have arrived is NO, executing a step of checking, e.g. one or more of those previously described herein.

If the answer obtained from the step of checking if the current surplus "As" is greater than or equal to a first threshold "Amax" is YES: the current supplied for recharging the vehicles "V" with higher priority will be set to said first threshold "Amax", according to said priority order of said vehicles "V". Otherwise, if the answer obtained from the step of checking if the current surplus "As" is NO: executing a step of checking if the current surplus "As" is greater than or equal to a second threshold "Amin", e.g. 1A, e.g. as described with reference to the previous implementation of the method. For example, if the answer obtained from the step of checking if the current surplus "As" exceeds a second threshold "Amin" is YES: the current supplied to the vehicles "V" with higher priority will be increased by at least said second threshold "Amin" until the current surplus "As" distributed to the various vehicles "V" is exhausted and until the current supplied for recharging vehicle "V" equals said first threshold "Amax". Otherwise, if the answer obtained from the step of checking if the current surplus "As" exceeds a second threshold "Amin" is NO: maintaining the currently set power distribution.

The present implementation makes it possible to discern between different possible scenarios that may occur at a charging station 3, so that current distribution will be maximized at all times, with any current surplus "As" being properly allocated according to the particular condition of charging station 3, charging devices 5, and vehicles "V" connected to charging devices 5. The present embodiment maximizes the sold current in all possible scenarios that may be encountered at a charging station 3.

Even more preferably, in the present implementation of the method according to the present invention, if the answer obtained from the step of checking if one or more vehicles "V" have arrived is NO: checking if:
- one or more vehicles "V" have been disconnected from a charging device 5 of the charging station 3;
- a first period of time "Δt1" of at least 10 minutes has already elapsed;
- the maximum available current "Aa" has increased.

If the answer obtained from these last three checks is NO, and/or, advantageously, in parallel with the same checks made after the arrival of a vehicle "V":
- executing a step of checking if said maximum available current "Aa" has decreased. If the answer obtained from the step of checking if said maximum available current "Aa" has decreased is NO: maintaining the currently set power distribution. Otherwise, if the answer obtained from the step of checking if said maximum available current "Aa" has decreased is YES: executing a step of checking if said maximum available current "Aa" is greater than or equal to said third threshold "Amid". If the answer is NO: the current supplied to the vehicles "V" will be zeroed, i.e. set to 0A.

Otherwise, if the answer is YES: based on said priority order of said vehicles "V", the current assigned to each vehicle "V" will be the current currently being used by each vehicle "V", if lower than said maximum available current "Aa"; otherwise, the current assigned to each vehicle "V" will be said maximum available current "Aa"; this distribution will continue until said maximum available current "Aa" has been totally distributed.

Still as regards the present implementation, referring back to the step of checking including three checks, if the answer to at least one of such three checks is YES, and in particular if said maximum available current "Aa" has not decreased: executing a step of checking if the current surplus "As" is greater than or equal to a second threshold "Amin", e.g. 1A. If the answer obtained from the step of checking the current surplus "As" is YES: the current supplied to the vehicles "V" with higher priority will increase by at least said second threshold "Amin" until the current surplus "As" distributed to the various vehicles "V" is exhausted and until the current supplied for recharging the vehicle "V" equals said first threshold "Amax". Otherwise, if the answer is NO: maintaining the currently set power distribution.

The present implementation of the method according to the present invention takes into account the most common situations that may be encountered at a charging station 3, maximizing power distribution for recharging vehicles "V". In particular, the present implementation makes it possible to maximize the sold current in the most common scenarios that may be found at a charging station 3.

In one possible implementation of the method according to the present invention, if the answer obtained from the step of checking if a vehicle "V" has arrived is YES, and if a second period of time "Δt2" has already elapsed, e.g. at least one 1 minute, executing a step of checking if the current surplus "As" is greater than or equal to a second threshold "Amin", e.g. 1A.

The present step of checking is preferably carried out in parallel with the previous steps of checking described herein with reference to the previous implementations of the method. Advantageously, said second period of time "Δt2" is shorter than said first period of time "Δt1".

If the answer obtained from the step of checking is YES: for those vehicles "V" which are absorbing all the current requested by the same vehicles "V" for recharging, the current will be increased by at least said second threshold "Amin" until the current surplus "As" distributed to the vehicles "V" is exhausted and until the current supplied for recharging the vehicle "V" equals said first threshold "Amax". Otherwise, if the answer obtained from the step of checking is NO: maintaining the currently set power distribution.

The present implementation of the method makes it possible to speed up the process of recharging the vehicle "V", or at least to reach a desired minimum range value for the vehicle "V", even if the current value requested by that vehicle "V" has already been reached. The present implementation maximizes current utilization, thus increasing the sold current.

In one possible implementation of the method according to the present invention, said control unit 30 is comprised in one of said charging devices 5. In the present embodiment of charging station 3, the method according to the present invention can be executed even if control unit 30 is incorporated into a charging device, thus not requiring a dedicated external management unit.

The method according to the present invention can therefore be executed at a charging station 3 even if said charging station 3 comprises no dedicated external management unit, since the method according to the present invention can be implemented as firmware suitably stored in a memory medium accessible to said control unit 30 of charging station 3.

In the present embodiment of charging station 3, one or more of said charging devices 5 comprise said control unit 30 and are entrusted with managing the power distribution among the various charging devices 5, e.g. in a Master/Slave configuration.

In the present embodiment, said charging device comprising said control unit 30 notifies the other charging devices 5 of the allocated power/current budgets in real time. In the present embodiment, said charging device 5 comprising said control unit 30 can still recharge a vehicle "V".

In an alternative embodiment, said control unit 30 is a separate unit which is independent of said charging devices 5. The method according to the present invention can thus be executed at a charging station 3 even if the control unit is not incorporated into a charging device 5, said method being executed, for example, through the use of a dedicated external management unit.

In further possible embodiments of charging station 3, a distributed distribution unit may be implemented, which may be comprised in one or more charging devices 5 and/or in one or more dedicated external management units.

Describing now in more detail a preferred implementation of the method according to the present invention, the method according to the present invention can be considered as a Dynamic Power Management (DPM) method executing a dynamic power management process.

In the preferred implementation, the method according to the present invention is adapted for optimized power distribution from a charging station 3 for recharging electric or electrified vehicles "V", among a plurality of charging devices 5, e.g. supplying AC power. According to the preferred embodiment, the method comprises the following steps:
- receiving a plurality of intrinsic data "D" of charging station 3 at a predetermined time instant "T", wherein said data "D" comprise:
   - a maximum available current "Aa" for charging station 3;
   - a total used current "Au", i.e. the sum of currents being used by all vehicles "V" connected to, and being recharged by, said charging devices 5;
   - a priority order of said vehicles "V", said priority order being a function of an order of arrival of said vehicles "V" at charging station 3;
- determining a current surplus "As" by subtracting said total used current "Au" from said maximum available current "Aa" ;
- checking if a vehicle "V" has arrived;
   - if NO, returning to the step of receiving a plurality of data (D);
- if YES, executing a sub-step of checking if it is the first vehicle:
   - if the answer is YES: executing a step of checking if said current surplus "As" is greater than or equal to said third threshold "Amid", e.g. 6A. If the answer is NO, returning to the step of receiving a plurality of data "D"; otherwise, if the answer is YES: executing a step of checking if said current surplus "As" is greater than or equal to a first threshold "Amax", e.g. 32A. If the answer is YES: the current supplied for recharging said first vehicle "V" will be set to said first threshold "Amax"; otherwise, if the answer is NO: the current supplied for recharging said first vehicle "V" will be set to a value that equals said current surplus "As".

If the answer obtained from said sub-step of checking if it is the first vehicle "V" is NO: continuing the method.

As the method is continued, a plurality of steps of checking will be carried out in parallel with one another; in particular, checking if said maximum available current "Aa" has decreased. If the answer obtained from said step of checking if said maximum available current "Aa" has decreased is NO: maintaining the currently set power distribution; if YES: executing a step of checking if said maximum available current "Aa" is greater than or equal to a third threshold "Amid". If the answer is NO: the current supplied to the vehicles "V" will be zeroed, i.e. set to 0A; otherwise, if the answer is YES: based on said priority order of said vehicles "V", the current assigned to each vehicle "V" will be the current currently being used by each vehicle "V", if lower than said maximum available current "Aa"; otherwise, the current assigned to each vehicle "V" will be said maximum available current "Aa". Such a distribution will continue until said maximum available current "Aa" has been fully distributed.

In parallel with said step of checking if said maximum available current "Aa" has decreased, a step is carried out to check if:
- one or more vehicles "V" have left the charging station 3 and a first period of time "Δt1" of at least 10 minutes has elapsed;
- the maximum available current "Aa" has increased;

- if the answer obtained from these last three checks made after the arrival of a vehicle "V" is NO: executing the step of checking if said maximum available current "Aa" has decreased, as previously described herein;
- otherwise, if the answer obtained from at least one of the last three checks made during the present step of checking is YES, and said maximum available current "Aa" has not decreased: executing a step of checking if the current surplus "As" is greater than or equal to a second threshold "Amin", e.g. 1A;
   - if the answer is YES: the current supplied to the vehicles "V" with higher priority will increase by at least said second threshold "Amin" until the current surplus "As" distributed to the various vehicles "V" is exhausted and until the current supplied for recharging the vehicle "V" equals said first threshold "Amax", distributing the current to the respective charging devices 5 and continuing the execution of the method at another time instant "T";
   - if the answer is NO: maintaining the currently set power distribution and continuing the execution of the method at another time instant "T".

Furthermore, in this preferred embodiment, a step of checking if one or more vehicles "V" have arrived is executed in parallel with the steps of checking previously described herein.

In addition, in the step of checking if one or more vehicles "V" have arrived:
- if the answer is NO: executing the previously described step of executing a step of checking if:
- one or more vehicles "V" have left the charging station 3;
- a first period of time "Δt1" of at least 10 minutes has already elapsed;
- the maximum available current "Aa" has changed; this latter step of checking has already been described, and will not therefore be described any further.

Otherwise, if the answer obtained from the step of checking if one or more vehicles "V" have arrived is YES: executing a step of checking if the current surplus "As" is greater than or equal to a first threshold "Amax", e.g. 32A;
- if the answer is YES: the current supplied for recharging the vehicles "V" with higher priority will be set to said first threshold "Amax" according to said priority order of said vehicles "V", distributing the current to the respective charging devices 5 and continuing the execution of the method at another time instant "T";
- if the answer is NO: executing a step of checking if the current surplus "As" is greater than or equal to a second threshold "Amin", e.g. 1A; this latter step is the same as the one already described with reference to the present preferred embodiment, and will not therefore be described any further.

Moreover, in the present preferred embodiment, in parallel with the previously described steps of checking, a time-out will be received which will indicate that a second period of time "Δt2" of at least 1 minute has already elapsed, followed by a step of checking if the current surplus "As" is greater than or equal to a second threshold "Amin", e.g. 1A;
- if the answer is YES: for those vehicles "V" which are absorbing all the current requested by the vehicle "V" itself for recharging it, the current will be increased by at least said second threshold "Amin" until the current surplus "As" distributed to the vehicles "V" is exhausted and until the current supplied for recharging the vehicle "V" equals said first threshold "Amax", distributing the current to the respective charging devices 5 and continuing the execution of the method at another time instant "T";
- if the answer is NO: maintaining the currently set power distribution and continuing the execution of the method at another time instant "T".

A further aspect of the present invention relates to a charging station 3.

Charging station 3 according to the present invention is adapted to implement the method according to the present invention as previously described herein.

In general, a charging station 3 according to the present invention is designed for recharging electric or electrified vehicles "V".

Said charging station 3 according to the present invention is adapted to be connected to an electric grid 2, the latter supplying a maximum available current "Aa" to said charging station 3.

Said charging station 3 according to the present invention comprises two or more charging devices 5 for recharging vehicles "V". Said charging devices 5 may be either AC or DC charging devices, preferably AC ones. Each charging device 5 being designed, depending on specific requirements, for recharging one vehicle "V" at a time and/or for recharging a plurality of vehicles "V" at the same time.

Said charging station 3 comprises a control unit 30 adapted to execute the method for optimized power distribution from a charging station 3 according to the present invention.

Said control unit 30 being adapted to control said charging devices 5.

Said charging devices 5 are preferably connected to one another through a data bus, preferably a low-voltage data bus, e.g. a PLC bus.

Generally, each charging device 5 comprises an input 51 through which part of the maximum available current "Aa" available from charging station 3 can be delivered to said charging device 5; and at least one output 52, through which current is supplied to vehicle "V" connected to said charging device 5 for recharging it.

Depending on the specific embodiment of charging device 5, it may comprise just a single output 52 for supplying current to one vehicle "V", and/or a plurality of independent outputs 52, suitable for supplying current to multiple vehicles "V", even different from one another.

The connection between charging device 5 and vehicle "V" is established through a cable and/or via a wireless connection in compliance with one or more vehicle charging standards implemented in said charging device 5. Said charging device 5 can, based on the current received at said input 51, deliver current to at least one of said at least one outputs 52 in compliance with the charging standard implemented in vehicle "V" requesting a charge. In particular, said charging device comprises electric and electronic power circuits (not shown) for delivering a correct current value to said output 52 in accordance with the adopted charging standard.

Preferably, a charging station 3 comprises a plurality of charging devices 5, preferably in such a number as to be able to simultaneously charge up to 32 different vehicles "V".

In a preferred embodiment of said charging station 3 according to the present invention, it comprises no control devices adapted to detect the state of charge of individual vehicles "V" connected to charging station 3. Such control devices are called SOC devices.

Charging station 3 according to the present invention allows for implementation of the method according to the present invention and dynamic allocation of charging power/current to every charging device 5, including AC charging devices.

In one possible embodiment of charging station 3 according to the present invention, said control unit 30 is incorporated into at least one, preferably only one, charging device 5. In the present embodiment, that charging device 5 which includes said control unit 30, preferably a single charging device 5, acts as a Master towards the other charging devices 5, which act as Slaves, within a network of said charging devices 5. When charging station 3 comprises a plurality of charging devices 5, one of such charging devices 5 is entrusted with managing the distribution of current, and notifies the other charging devices 5 of their assigned power/current budgets in real time. This "smart" charging device 5 is still capable of recharging a vehicle "V".

In another possible embodiment of charging station 3 according to the present invention, said control unit 30 is separate from, and independent of, charging devices 5. In the present embodiment, said control unit 30 is, for example, incorporated into a dedicated external management unit. Said dedicated external management unit comprises a smart power meter, through which it can obtain some intrinsic data "D" of charging station 3.

In one possible embodiment of charging station 3 according to the present invention, said maximum available current "Aa" is a datum provided by a smart power meter connected to said control unit 30 via a data bus, e.g. a low-voltage data bus and/or a PLC bus. In one possible embodiment, said smart power meter (not shown in detail herein) is incorporated into said charging device 5 which acts as a Master within the network of charging devices 5. In an alternative embodiment, said smart power meter is located in a remote area from said charging devices 5, being for example incorporated into said control unit 30 when the latter is external to and independent of said charging devices 5, e.g. incorporated into a dedicated external management unit.

In one possible embodiment of charging station 3 according to the present invention, the maximum available current "Aa" that the electric grid 2 can supply to charging station 3 is a datum provided by a central system 21, e.g. a charging station management system or a central system or a back-end system. Said charging station 3 and said central system 21 being adapted to communicate through suitable protocols, e.g. OCPP, MQTT or proprietary protocols.

In one possible embodiment of charging station 3 according to the present invention, a user interface 32 is comprised. Through said user interface 32, a user "U" can enter a charging request and/or a request for maximum power supply.

In the present embodiment, the request is transmitted through an application running on a mobile device "M" of user "U", via a wireless connection.

Said user interface 32 is adapted to communicate with said control unit 30, e.g. through a data bus connecting said charging devices 5, so that the charging request will be correctly received, and the intrinsic data "D" of charging station 3 will also include a current requested by each vehicle "V" about to be recharged. Such data "D" are useful to implement the method according to the present invention, as previously described herein. The present embodiment allows user "U" to place a charging request and indicate the desired current value, by specifying a requested current value, so that charging station 3 and the method according to the present invention will then be able to dynamically distribute the available current while taking into account the specific requests received from each user "U". Said requested current value may be different from the optimal current actually necessary to fully charge vehicle "V", since it is the one desired by the user and may be dictated by the time available to, or the costs incurred by, the user.

Said control unit 30 is preferably programmed to execute the method for optimized power distribution from a charging station 3 according to the present invention at a time instant "T", and to repeat it at intervals equal to or shorter than 1 minute, preferably every 20 msec, even more preferably while also performing said step of receiving a plurality of data "D" and determining a current surplus "As" every 20 msec.

Describing now in detail some possible embodiments of said charging station 3 according to the present invention, Figures 1A, 1B and 1C show three possible embodiments of charging station 3 according to the present invention.

In particular, Figure 1A shows a first embodiment wherein a charging device 5 comprises control unit 30 and can determine intrinsic data "D" of charging station 3 at a predetermined time instant. The various charging devices 5 comprised in charging station 3 will communicate through a data bus. A charging device 5 comprising control unit 30 will notify the other charging devices 5 of the assigned power budgets, and the allocated current will be received at said input 51, following the execution of the method at time instant "T". The charging device 5 that comprises control unit 30 will still be able to recharge a vehicle "V". Each charging device 5 will be connected, e.g. through a cable, to a vehicle "V" for recharging it. The current supplied for recharging vehicle "V" will be delivered through output 52.

The various intrinsic data "D" of charging station 3 are determined, for example, by said control unit 30, e.g. by means of a smart power meter included in said control unit 30. Figure 1A shows a distribution network 2, in particular an AC one, that supplies said maximum available current "Aa".

Figure 1B shows a second embodiment wherein control unit 30 is independent of charging devices 5, and determines the intrinsic data "D" of charging station 3 at a predetermined time instant. In the present embodiment, said control unit 30 is connected to charging devices 5 through a data bus transporting said data "D". In this embodiment as well, control unit 30 will notify the charging devices 5 included in the charging station of the assigned power budgets in real time, and the supplied current will be received at said input 51, following the execution of the method at time instant "T". Each charging device 5 will be connected, e.g. through a cable, to a vehicle "V" for recharging it. The current supplied for recharging vehicle "V" will be delivered through output 52.

Figure 1B shows a distribution network 2, in particular an AC one, that supplies said maximum available current "Aa", which is determined by said control unit, which comprises a smart power meter capable of, for example, determining said maximum available current "Aa".

Figure 1C shows a third embodiment wherein a charging device 5 comprises control unit 30, as in the embodiment shown in Figure 1A, but in the present embodiment the intrinsic data "D" of charging station 3 at a predetermined time instant "T" are provided by a central system 21, e.g. a back-end system or a charging station management system (CSMS). Said central system 21 communicates with said charging station 3, specifically with said control unit 30, through at least one suitable communication protocol, e.g. OCPP, MQTT, or proprietary protocols. In the present embodiment, in order to execute the method according to the present invention, control unit 30 receives from said central system 21, which in turn comprises a centralized server or configurator, the maximum available power or maximum available current "Aa" for charging station 3.

More generally, regardless of the specific embodiment of charging station 3, the method according to the present invention tries, in a first attempt, to maximize the power or current distributed to vehicles "V" connected to a charging device 5 and requesting a charge, taking into account the priority order, which is a function of the time of arrival at charging station 3.

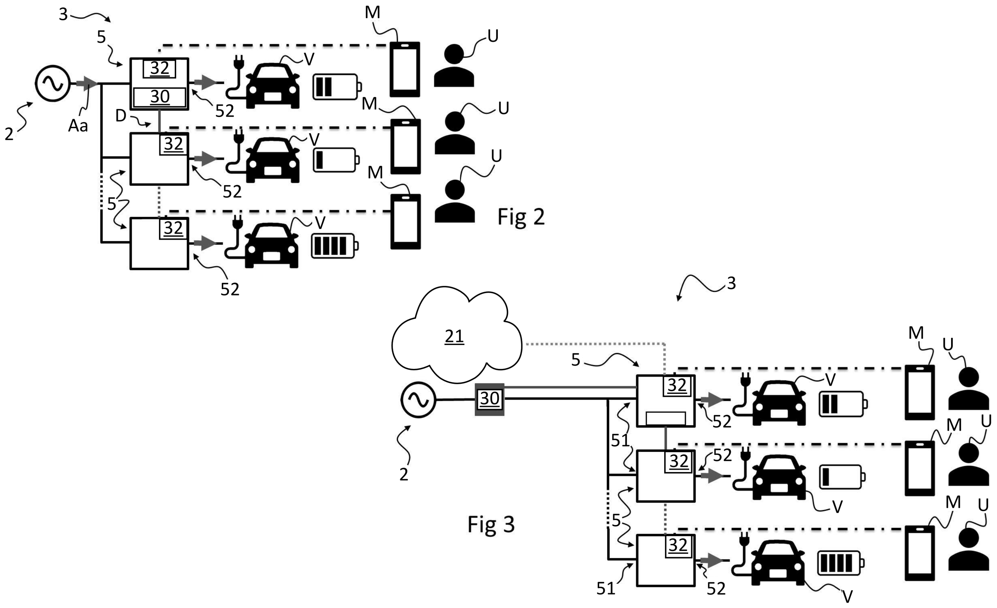

Figure 2 shows one possible implementation of the method and one possible embodiment of the charging station according to the present invention, wherein user "U" enters, through a user interface 32, a charging request using a mobile device "M" via a wireless connection.

In the present embodiment of charging station 3, the user can send a charging request in a smart and dynamic way. Such datum can be used for implementing the method according to the present invention, as previously described herein. Preferably, each charging device 5 comprises said user interface 32.

Said user interface 32 is adapted to communicate with said control unit 30, e.g. through a data bus connecting said charging devices 5, to make sure that the charging request will be correctly received, and that, as an intrinsic datum "D" of charging station 3, a current requested by each vehicle "V" about to be recharged will be provided. Such datum "D" is useful to implement the method according to the present invention, as previously described herein.

Figure 3 shows a further implementation of the method and a further embodiment of charging station 3 according to the present invention, which is a combination of the embodiments shown in Figures 1A-1C and 2. The present embodiment of charging station, and hence the present implementation of the method, includes all the stakeholders involved. It is clear that the present embodiment is merely illustrative and may be easily modified according to specific requirements.

The method according to the present invention first maximizes the power distributed to vehicles "V" connected to charging devices 5 of a charging station 3 and requesting a recharge, taking into account said priority order.

Periodically, e.g. at every time instant "T", e.g. every minute, preferably every 20 msec, the method according to the present invention checks said maximum available current "Aa" and the total used current "Au", which is actually been used by vehicles "V" for recharging, and checks if any other vehicles "V" have been connected to charging devices 5, in order to determine a current surplus "As".

When distributing current to the various charging devices 5 for recharging the connected vehicles "V", the charging management logic takes into account:
- the charging priority order, which is a function of, for example, the order of arrival of the vehicles "V" at charging station 3;
- waiting a predetermined period of time (Δt1, Δt2) before re-allocating current to vehicles, if there is a current surplus "As";
- total used current "Au";
- a possible reduction in the maximum available current "Aa";
- charging executed by only one charging device 5 or by a plurality of charging devices 5, up to a predefined maximum number, e.g. 32.

As a matter of fact, the present invention provides a charging device 5 which can provide dynamic power/current management because it internally comprises said control unit 30, while still being able to operate as a charging terminal.

The method according to the present invention combines the supply of maximum current/power with a priority order, which is a function of, for example, the order of arrival of users "U" at charging device 5 for recharging vehicle "V".

The method according to the present invention makes it possible to allocate/re-allocate the current or power supplied by an electric grid 2 on the basis of the maximum available current "Aa" and any variations thereof, for the purpose of charging more than one vehicle "V" simultaneously, e.g. up to thirty-two vehicles "V" at the same time. The method according to the present invention provides optimization of the available power/current to sell as much energy as possible.

The method according to the present invention makes it possible to distribute in an optimized manner the power or current supplied by an electric grid 2 among multiple vehicles "V" requesting to be recharged from charging station 3.

Power/current distribution is managed in such a way as to optimize the power/current transmitted to vehicles "V", while taking into account the current requested by each vehicle "V", the requested charging type, e.g. single-phase or three-phase, and/or the order of arrival.

The method according to the present invention is iterative, in that it is executed at every time instant "T", e.g. every minute or, more preferably, every 20 msec, and allows for dynamic changes to the balanced power/current distribution also on the basis of current requests coming from: management systems of third parties, e.g. of the operator of the electric grid 2; a cloud-based charging management system, defining said central system 21; and/or customers or users "U" of charging station 3 wanting to recharge their vehicles "V".

The method according to the present invention can also be implemented in charging stations 3 not including any devices for checking the state of charge; therefore, it can also be implemented in charging stations 3 comprising charging devices 5 for AC charging.

Allocation and optimization of the distributed power/current are managed by the method according to a priority order, which is preferably a FIFO priority order, without however any vehicle "V" being disconnected from a charging device 5 until the charging process is stopped either autonomously by vehicle "V" itself or manually by user "U", in the absence of any error or fault.

Any alternative embodiments which have not been described herein, but which can be easily inferred by a person skilled in the art in light of the contents of the present patent application, shall be considered to fall within the scope of the present invention.

**REFERENCE NUMERALS**

| | |
|---|---|
| Electric grid | 2 |
| Central system | 21 |
| Charging station | 3 |
| Control unit | 30 |
| User interface | 32 |
| Charging devices | 5 |
| Input | 51 |
| Output | 52 |
| Maximum available current | "Aa" |
| First threshold | "Amax" |
| Second threshold | "Amin" |
| Current surplus | "As" |
| Total used current | "Au" |
| Data | "D" |
| First period of time | "Δt1" |
| Second period of time | "Δt2" |
| Mobile device | "M" |
| Time instant | "T" |
| User | "U" |
| Vehicle | "V" |

## Claims

1. Method for optimized power distribution from a charging station (3) for recharging electric or electrified vehicles (V) among a plurality of charging devices (5) for recharging vehicles (V); said charging station (3) further comprising a control unit (30) adapted to execute said method for optimized power distribution;
said method comprising the following steps:
- receiving a plurality of intrinsic data (D) of the charging station (3) at a predetermined time instant (T), wherein said data (D), relating to said time instant (T), comprise:
- a maximum available current (Aa) for the charging station (3);
- a total used current (Au), i.e. the sum of currents being used by all vehicles (V) connected to, and being recharged by, said charging devices (5);
- a priority order of said vehicles (V), being at least a function of an order of arrival of said vehicles (V) at the charging station (3);
- determining a current surplus (As) by subtracting said total used current (Au) from said maximum available current (Aa);
- checking if a vehicle (V) has arrived;
- if NO, returning to the step of receiving a plurality of data (D);
- if YES, executing one or more of the following steps in order to check if:
- at least a period of time (Δt1, Δt2) has already elapsed since the arrival of a previous vehicle (V);
- one or more vehicles (V) have arrived;
- one or more vehicles (V) have left the charging station (3);
- said maximum available current (Aa) has increased;
- if the answer obtained from all checks made after the arrival of a vehicle (V) is NO, or in parallel with said checks made after the arrival of a vehicle (V), executing a step of:
- checking if said maximum available current (Aa) has decreased;
- if said maximum available current (Aa) has not decreased and the answer obtained from at least one of the other checks made after the arrival of a vehicle (V) is YES:
- distributing the current surplus (As) among the vehicles (V) being recharged by increasing the current supplied for recharging the vehicles (V), wherein during said step of distributing the surplus said priority order of said vehicles (V) is taken into account;
or:
if the answer obtained from said step of checking if said maximum available current (Aa) has decreased is NO: maintaining the currently set power distribution; if YES: decreasing the current supplied for recharging the vehicles (V), taking into account said priority order of said vehicles (V).

2. Method according to claim 1, wherein if said current surplus (As) is greater than or equal to a first threshold (Amax), e.g. 32A, then the current supplied for recharging each vehicle (V) will be set to said first threshold (Amax) according to said priority order of said vehicles (V); or if the current surplus (As) is greater than or equal to a second threshold (Amin), e.g. 1A, the current supplied to the vehicles (V) with higher priority will increase by at least said second threshold (Amin) until the current surplus (As) distributed to the various vehicles (V) is exhausted and until the current supplied for recharging the vehicle (V) equals said first threshold (Amax).

3. Method according to claim 1 or 2, wherein said step of checking if a vehicle (V) has arrived comprises a sub-step of checking if it is the first vehicle (V):
if the answer is YES: executing a step of checking if said current surplus (As) is greater than or equal to a third threshold (Amid), e.g. 6A;
- if NO, returning to the step of receiving a plurality of data (D);
- if YES: executing a step of checking if said current surplus (As) is greater than or equal to a first threshold (Amax), e.g. 32A;
- if the answer is YES: the current supplied for recharging said first vehicle (V) will be set to said first threshold (Amax);
- if the answer is NO: the current supplied for recharging said first vehicle (V) will be set to a value equal to said current surplus (As).

4. Method according to claim 2 or 3, wherein if the current supplied for recharging a vehicle (V) is equal to 0A, then the current increase assigned to that vehicle (V) will be greater than said second threshold (Amin) and at least equal to a third threshold (Amid), e.g. 6A.

5. Method according to a preceding claim, wherein, if the answer obtained from the step of checking if a vehicle (V) has arrived is YES, checking if:
- one or more vehicles (V) have been disconnected from a charging device (5) of the charging station (3);
- a first period of time (Δt1) has already elapsed, e.g. at least 10 minutes;
- the maximum available current (Aa) has increased;
- if the answer obtained from at least one of these three checks made after the arrival of a vehicle (V) is YES: executing a step of checking if the current surplus (As) is greater than or equal to a second threshold (Amin), e.g. 1A;
- if the answer is YES: the current supplied to the vehicles (V) with higher priority will increase by at least said second threshold (Amin) until the current surplus (As) distributed to the various vehicles (V) is exhausted and until the current supplied for recharging the vehicle (V) equals said first threshold (Amax);
- if the answer is NO: maintaining the currently set power distribution;
if the answer obtained from all three checks made after the arrival of a vehicle (V) is NO: executing a step of checking if said maximum available current (Aa) has decreased;
- if the answer is NO: maintaining the currently set power distribution;
- if the answer is YES: decreasing the current supplied for recharging the vehicles (V), taking into account said priority order of said vehicles (V).

6. Method according to a preceding claim, wherein, if the answer obtained from the step of checking if a vehicle (V) has arrived is YES, checking if one or more vehicles (V) have arrived;
- if the answer is YES: executing a step of checking if the current surplus (As) is greater than or equal to a first threshold (Amax), e.g. 32A;
- if the answer is YES: the current supplied for recharging the vehicles (V) with higher priority will be set to said first threshold (Amax) according to said priority order of said vehicles (V);
- if the answer is NO: executing a step of checking if the current surplus (As) is greater than or equal to a second threshold (Amin), e.g. 1A;
during the execution of the step of checking if the current surplus (As) exceeds a second threshold (Amin), if the answer is:
- YES: the current supplied to the vehicles (V) with higher priority will increase by at least said second threshold (Amin) until the current surplus (As) distributed to the various vehicles (V) is exhausted and until the current supplied for recharging the vehicle (V) equals said first threshold (Amax);
- NO: maintaining the currently set power distribution.

7. Method according to claim 6, wherein if the answer obtained from the step of checking if one or more vehicles (V) have arrived is NO:
checking if:
- one or more vehicles (V) have been disconnected from a charging device (5) of the charging station (3);
- a first period of time (Δt1) of at least 10 minutes has already elapsed;
- the maximum available current (Aa) has increased;
- if the answer obtained from at least one of these three checks is YES, and said maximum available current (Aa) has not decreased: executing a step of checking if the current surplus (As) is greater than or equal to a second threshold (Amin), e.g. 1A;
- if the answer is YES: the current supplied to the vehicles (V) with higher priority will increase by at least said second threshold (Amin) until the current surplus (As) distributed to the various vehicles (V) is exhausted and until the current supplied for recharging the vehicle (V) equals said first threshold (Amax);
- if the answer is NO: maintaining the currently set power distribution;
- if the answer obtained from all three checks is NO: executing a step of checking is said maximum available current (Aa) has decreased;
- if the answer is NO: maintaining the currently set power distribution;
- if the answer is YES: decreasing the current supplied for recharging the vehicles (V), taking into account said priority order of said vehicles (V).

8. Method according to one of the preceding claims, wherein if the answer obtained from the step of checking if a vehicle (V) has arrived is YES, and if a second period of time (Δt2) has already elapsed, e.g. at least one 1 minute, executing a step of checking if the current surplus (As) is greater than or equal to a second threshold (Amin), e.g. 1A;
- if the answer is YES: for those vehicles (V) which are absorbing all the current requested by the vehicle (V) itself for recharging it, the current will be increased by at least said second threshold (Amin) until the current surplus (As) distributed to the vehicles (V) is exhausted and until the current supplied for recharging the vehicle (V) equals said first threshold (Amax);
- if the answer is NO: maintaining the currently set power distribution.

9. Method according to one of the preceding claims, wherein, during the step of checking if said maximum available current (Aa) has decreased, if the answer is NO:
maintaining the currently set power distribution;
if the answer is YES: executing a step of checking if said maximum available current (Aa) is greater than or equal to a third threshold (Amid);
if the answer is NO: the current supplied to the vehicles (V) will be zeroed, i.e. set to 0A;
if the answer is YES: based on said priority order, the current assigned to each vehicle (V) will be the current currently being used by each vehicle (V), if lower than said maximum available current (Aa), otherwise it will be said maximum available current (Aa);
such distribution will be maintained until said maximum available current (Aa) has been totally distributed.

10. Charging station (3) for recharging electric or electrified vehicles (V);
said charging station (3) being adapted to be connected to an electric grid (2) supplying to said charging station (3) a maximum available current (Aa) for said charging station (3).
said charging station (3) comprising two or more charging devices (5) for recharging the vehicles (V);
said charging station (3) comprising a control unit (30) adapted to execute a method for optimized power distribution from a charging station (3) according to claim 1.

11. Charging station (3) according to claim 10, wherein:
- said control unit (30) being adapted to control said charging devices (5);
- said charging devices (5) being mutually connected through a low-voltage data bus.

12. Charging station (3) according to claim 10 or 11, wherein said maximum available current (Aa) is a datum supplied by a smart power meter connected to said control unit (30) through a low-voltage data bus.

13. Charging station (3) according to claim 10 or 11 or 12, wherein the maximum available current (Aa) is a datum supplied by a central system (21), e.g. a charging station management system or a central system or a back-end system; said charging station (3) and said central system (21) being adapted to communicate through suitable protocols, e.g. OCPP, MQTT, or proprietary protocols.

14. Charging station (3) according to claim 10 or 11 or 12 or 13, comprising a user interface (32) through which a user (U) can enter a charging request and/or a request for maximum power supply, wherein the request is transmitted through an application on a mobile device (M) of the user (U), via a wireless connection.

15. Charging station (3) according to one of claims 10 to 14, wherein said control unit (30) is comprised in one of said charging devices (5).
